# EUROPÄISCHE PATENTANMELDUNG

(11) **EP 4 361 979 A1**
(43) Veröffentlichungstag der Anmeldung: **01.05.2024**
(21) Anmeldenummer: 22203522.2
(22) Anmeldetag: 25.10.2022
(51) Int. Cl.: G07F 7/06, G06Q 20/40

(54) **VERARBEITUNGSVORRICHTUNG UND COMPUTERLESBARES MEDIUM MIT INSTRUKTIONEN FÜR EINE VERARBEITUNGSVORRICHTUNG**

(71) Anmelder: RE DEPOSIT Solutions GmbH, 98693 Ilmenau (DE)
(72) Erfinder: FRANK, Gabriella, 99310 Arnstadt (DE); BUHL, Katja, 56626 Andernach (DE)
(74) Vertreter: Viering, Jentschura & Partner mbB Patent- und Rechtsanwälte

(57) **Zusammenfassung**

Es wird eine Verarbeitungsvorrichtung (100), bereitgestellt, aufweisend in einem Gehäuse (180): eine Aufnahmevorrichtung (110) zum Aufnehmen eines zu verarbeitenden Formkörpers (102, 190); eine Transportstrecke (104, 174, 176); eine Verarbeitungseinheit (112), die zu einem Entwerten des Formkörpers (190) eingerichtet und mit der Aufnahmevorrichtung (110) mittels der Transportstrecke (104, 174, 176) verbunden ist, wobei die Transportstrecke (104, 174, 176) eingerichtet ist, den Formkörper (190) von der Aufnahmevorrichtung (110) zu der Verarbeitungseinheit (112) zu transportieren; mindestens einen Sensor (134), der eingerichtet ist, einen Abstand (192, 194) zwischen dem Sensor (134) und dem Formkörper (190) an mindestens einer Position der Transportstrecke (104, 174, 176) zu erfassen; und eine Ermittlungsvorrichtung (118), die eingerichtet eine zeitliche Änderung des Abstandes (192, 194) zu ermitteln und ein Abstandssignal (154) auszugeben, das zu der ermittelten Abstandsänderung korrespondiert.

## Beschreibung

Verschiedene Ausführungsbeispiele betreffen eine Verarbeitungsvorrichtung zum Entwerten von Formkörpern, beispielsweise eine Leergutgebinde-Rücknahmevorrichtung.

Im Bereich der Leergutgebinde-Rücknahme sind die zurückgenommenen Leergutgebinde in der Regel mit einem Pfandwert beaufschlagt. Leergutgebinde können PET-Flaschen, Dosen oder Einwegglasflaschen sein. Bei der Leergutgebinde-Rücknahme wird über einen optischen Sensor oder Ultraschallsensor das Zuführen des Leergutgebindes in eine Entwertungseinheit ermittelt. Die Entwertungseinheit weist abhängig von der Art des Leergutgebindes ein Schneidwerk (bspw. für PET-Flaschen), ein Kompaktierwerk (bspw. für Dosen) oder ein Brechwerk (bspw. für Einwegglasflaschen) auf.

In der Vergangenheit ging man davon aus, dass durch eine Quittierung eines Sensors, dass das Leergutgebinde der Entwertungseinheit zugeführt wurde, eine ausreichende Betrugssicherheit gegeben sei und von einer sicheren Entwertung (Zerstörung) des zuvor bepfandeten Leergutgebindes (auch als pfandbeaufschlagtes Leergutgebinde bezeichnet) ausgegangen werden kann. Manipulationen an den Leergutgebinde-Rücknahmevorrichtungen haben jedoch dazu geführt, dass Leergutgebinde zwischen der Quittierung des Sensors und der Entwertungseinheit abgefangen wurden und erneut der Leergutgebinde-Rücknahmevorrichtung zugeführt werden konnten.

Daher ist ein technischer Nachweis der Entwertung bzw. Zerstörung bepfandeter Leergutgebinde vor einer Auszahlung des Pfandbetrages erforderlich.

Herkömmliche Nachweise der Entwertung implementieren die Überschreitung eines statisch festgelegten Schwellenwertes als Kriterium. Dies kann im normalen Entwertungsbetrieb eine zuverlässige Lösung darstellen. Eine konkrete Rückverfolgbarkeit und Auswertung zwischen ermittelten und erwarteten Messwerten während einer Entwertung erfolgt jedoch nicht.

Es wird eine Verarbeitungsvorrichtung, eine Ermittlungsvorrichtung für eine Verarbeitungsvorrichtung und ein computerlesbares Medium mit Instruktionen für eine Verarbeitungsvorrichtung bereitgestellt. Die Verarbeitungsvorrichtung ist zum Entwerten von Formkörpern eingerichtet. Die Verarbeitungsvorrichtung kann beispielsweise eine Leergutgebinde-Rücknahmevorrichtung sein. Dadurch kann eine verbesserte Leergutgebinde-Rücknahme ermöglicht werden, beispielsweise eine Leergutgebinde-Rücknahme mit verbessertem Betrugsschutz.

Verschiedene Ausführungsformen beziehen sich auf eine Verarbeitungsvorrichtung aufweisend in einem Gehäuse: eine Aufnahmevorrichtung zum Aufnehmen eines zu verarbeitenden Formkörpers; eine Transportstrecke; eine Verarbeitungseinheit, die zu einem Entwerten des Formkörpers eingerichtet und mit der Aufnahmevorrichtung mittels der Transportstrecke verbunden ist, wobei die Transportstrecke eingerichtet ist, den Formkörper von der Aufnahmevorrichtung zu der Verarbeitungseinheit zu transportieren; mindestens einen Sensor, der eingerichtet ist, einen Abstand zwischen dem Sensor und dem Formkörper an mindestens einer Position der Transportstrecke zu erfassen; und eine Ermittlungsvorrichtung, die eingerichtet eine zeitliche Änderung des Abstandes zu ermitteln und ein Abstandssignal auszugeben, das zu der ermittelten Abstandsänderung korrespondiert.

Dies ermöglicht eine Entkopplung des Sensors von der Verarbeitungseinheit und eine Nutzung des Sensors und der Ermittlungsvorrichtung in anderen Verarbeitungseinheiten. Der Sensor kann frei bzw. variabel in der Verarbeitungsvorrichtung angeordnet werden. Der Sensor und die Ermittlungsvorrichtung können außerhalb des Verschmutzungsbereichs der Verarbeitungsvorrichtung angeordnet werden.

Der Sensor zur Entfernungsermittlung kann derart eingerichtet sein, dass durch die Auswertung der Messungen des Abstandes (der Entfernung), beispielsweise einer Änderung des Abstandes (auch als Abstandsänderung bezeichnet) zum Formkörper in schneller Folge mit hoher Wahrscheinlichkeit zwischen einem Übereinstimmen mit einer vorgegebenen Bewegung des Formkörpers und einem Abweichen der Bewegung des Formkörpers von der vorgegebenen Bewegung unterschieden werden kann. Ein Abweichen der Bewegung des Formkörpers von der vorgegebenen Bewegung kann beispielsweise auf einen Fehler oder eine Manipulation bei der Zerstörung des Formkörpers zurückzuführen sein. Dadurch wird beispielsweise eine Leergutgebinde-Rücknahme mit verbessertem Betrugsschutz ermöglicht.

Verschiedene Ausführungsbeispiele betreffen eine Ermittlungsvorrichtung für eine Verarbeitungsvorrichtung zum Entwerten von Formkörpern, die Ermittlungsvorrichtung eingerichtet eine zeitliche Änderung eines Abstandes eines Formkörpers zu einem Sensor zu ermitteln und ein Abstandssignal auszugeben, das zu der ermittelten Abstandsänderung korrespondiert, wobei der Sensor eingerichtet ist, einen Abstand zwischen dem Sensor und dem Formkörper an mindestens einer Position einer Transportstrecke zu erfassen; und wobei die Transportstrecke eingerichtet ist, den Formkörper zu einer Verarbeitungseinheit zu transportieren, wobei die Verarbeitungseinheit zu einem Entwerten des Formkörpers eingerichtet ist und mit der Transportstrecke verbunden ist.

Dies ermöglicht eine einfache Montage/Demontage der Ermittlungsvorrichtung in oder an der Verarbeitungsvorrichtung, beispielsweise einer Leergutgebinde-Rücknahmevorrichtung.

Verschiedene Ausführungsbeispiele betreffen ein computerlesbares Medium für eine zuvor beschriebene Verarbeitungsvorrichtung aufweisend Instruktionen, die, wenn sie von einem Prozessor ausgeführt werden, den Prozessor dazu veranlassen: Erfassen eines Abstandes zwischen dem Sensor und dem Formkörper auf der Transportstrecke; Ermitteln einer Änderung des Abstandes des Formkörpers zum Sensor; und Ausgeben eines Abstandssignals, dass eine zu der Abstandsänderung korrespondierende Information aufweist.

Dies ermöglicht eine Verarbeitungsvorrichtung, beispielsweise eine Leergutgebinde-Rücknahme, mit verbesserter Fehlererkennung, beispielsweise verbessertem Betrugsschutz, bereitzustellen.

Ausführungsbeispiele der Erfindung sind in den Figuren dargestellt und werden im Folgenden näher erläutert.

Es zeigen:
- Figuren 1A bis 1B: schematische Ansichten einer Leergutgebinde-Rücknahmevorrichtung als Beispiel einer Verarbeitungsvorrichtung;
- Figur 2: eine schematische Ansicht einer Leergutgebinde-Rücknahmevorrichtung;
- Figur 3A bis 3B: schematische Ansichten einer Leergutgebinde-Rücknahmevorrichtung;
- Figur 4A bis 4B: schematische Ansichten einer Leergutgebinde-Rücknahmevorrichtung;
- Figur 5A bis 5B: schematische Ansichten einer Leergutgebinde-Rücknahmevorrichtung; und
- Figur 6: ein Ablaufdiagramm eines Verfahrens zur Leergutgebinde-Rücknahme.

In der folgenden ausführlichen Beschreibung bezieht sich auf die beigefügten Zeichnungen Bezug genommen, in denen zur Veranschaulichung spezifische Details und Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

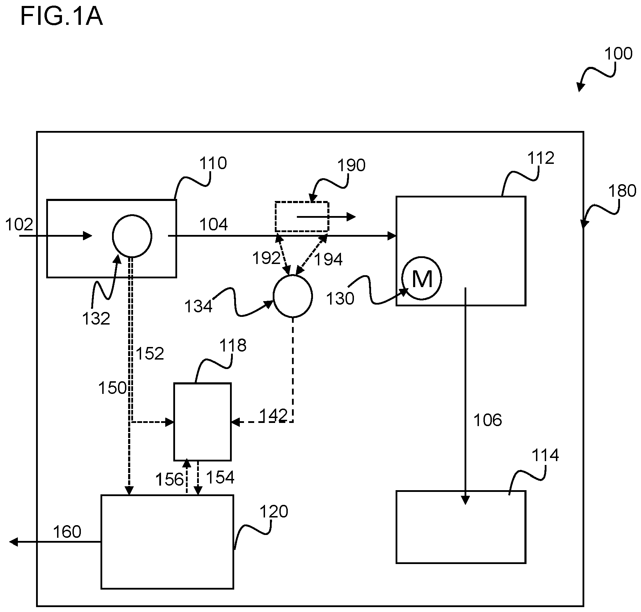

**FIG.1A** veranschaulicht eine schematische Ansicht einer Verarbeitungsvorrichtung 100. Die Verarbeitungsvorrichtung 100 wird nachfolgend am Beispiel einer Leergutgebinde-Rücknahmevorrichtung 100 beschrieben, ist jedoch nicht darauf beschränkt. Die Verarbeitungsvorrichtung 100 kann eine beliebige Vorrichtung sein, die zum Zerstören von Formkörpern eingerichtet ist. Ein Zerstören kann abhängig von der Beschaffenheit des Formkörpers in diesem Sinne beispielsweise ein Schmelzen, Schneiden, Brechen, Kompaktieren, Zerteilen, elektromagnetisches Verändern oder eines sonstigen vergleichbaren Prozesses sein, der auf die Form und/oder eine wesentliche Eigenschaft des Formkörpers hat, beispielsweise ein Markieren mit Farbe. Ein elektromagnetisches Verändern des Leergutgebindes kann beispielsweise eine "Entwertung", beispielsweise ein Löschen oder ein Zurücksetzen, von RFID (engl. radio-frequency identification)-Chips sein, der an und/oder in dem Pfandgebinde angebracht ist. Das elektromagnetische Verändern kann derart eingerichtet sein, dass eine Wiederabgabe der RFID nicht mehr möglich ist. Eine Zerstörung des Pfandgebindes kann dabei optional sein. Beispielsweise kann ein Löschen der RFID ausreichend sein. Mit anderen Worten, der Formkörper des Pfandgebindes und der RFID-Chip selbst können in der Entwertung unverändert belassen bleiben und lediglich die auf dem RFID-Chip hinterlegte RFID kann entfernt werden. Derartige Pfandgebinde können beispielsweise Mehrweggebinde sein, beispielsweise Mehrweggeschirr, bei dem die RFID nach einer Reinigung des Mehrweggebindes ersetzt wird, beispielsweise eine RFID auf dem RFID-Chip hinterlegt wird.

Die Leergutgebinde-Rücknahmevorrichtung 100 kann auch als Reverse-Vending-Machine (RVM), Reverse-Vending-System (RVS), Leergut-Rücknahme-Automat (LGA) oder Kompaktierer bezeichnet werden.

Die Leergutgebinde-Rücknahmevorrichtung 100 weist eine Aufnahmevorrichtung 110 auf, in die Leergutgebinde 102 von extern zugeführt werden. Leergutgebinde 102 sind stückgutförmig Formkörper, beispielsweise Einwegglasflaschen, PET-Flaschen, Dosen aus Aluminium oder Weißblech.

In der Aufnahmevorrichtung 110 wird zugeführtes Leergutgebinde 102 beispielsweise auf einem Laufband an einem Sensor 132 (auch als Zufuhrsensor 132 bezeichnet) vorbeigeführt, der den Typ des Leergutgebindes 102 erfasst. Der Zufuhrsensor 132 ist beispielsweise ein Barcode-Scanner 132, der den Barcode des zugeführten Leergutes 102 erfasst. Dadurch kann der Leergutgebindetyp des zugeführten Leergutes 102 ermittelt werden. Im Falle eines pfandbeaufschlagten Leergutgebindes 190 wird das pfandbeaufschlagte Leergutgebinde 190 auf einer Transportstrecke 104 einer zu dem Leergutgebindetyp korrespondieren Verarbeitungseinheit 112 zugeführt.

Der Zufuhrsensor 132 kann den ermittelten Leergutgebindetyp des erfassten Leergutgebindes 102 an eine Pfandrückgabeeinheit 120 übermitteln (in FIG.1A mittels des gepunkteten Pfeils 150 veranschaulicht) und/oder eine Ermittlungsvorrichtung 118 übermittelt werden (in FIG.1A mittels des gepunkteten Pfeils 152 veranschaulicht).

Die Verarbeitungseinheit 112 weist beispielsweise einen Elektromotor 130 auf mittels dessen das erfasste Leergutgebinde 190 derart entwertet wird oder der Entwertung zugeführt wird, dass es nicht erneut der Leergutgebinde-Rücknahmevorrichtung 100 zugeführt werden kann. Entsprechend kann die Verarbeitungseinheit 112 ein Schneidwerk (beispielsweise für PET-Flaschen), ein Kompaktierwerk (beispielsweise für Dosen) ein Brechwerk (beispielsweise für Einwegglasflaschen); eine Archimedische Schraube (beispielsweise für einen Schmelzofen) aufweisen. Der Elektromotor 130 treibt mit dem Betriebsstrom ein mechanisches Werk zur Entwertung des erfassten Leergutgebindes 190 an, beispielsweise das Schneidwerk, das Kompaktierwerk, das Brechwerk oder die Archimedische Schraube.

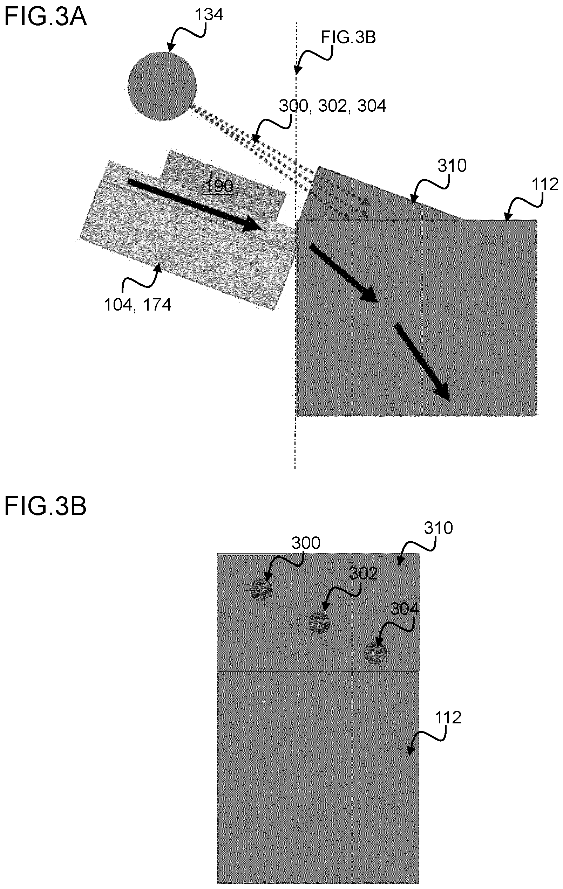

Ein Sensor 134 ist eingerichtet, die Bewegung des Leergutgebindes 190 an zumindest einer Position der Transportstrecke 104 zu überwachen. Der Sensor 134 ist zur Entfernungsmessung eingerichtet und derart in dem Gehäuse 180 der Leergutgebinde-Rückgabevorrichtung 100 angeordnet, dass ein definierter Raum der Transportstrecke 104 (auch als Überwachungsbereich bezeichnet) überwacht wird. Der Überwachungsbereich (siehe auch FIG.3A bis FIG.5B) ist auf einen Teil bzw. einen Abschnitt der Transportstrecke 104 gerichtet, um diese zu überwache. Der Überwachungsbereich kann jedoch auch ein Bereich sein, der der Verarbeitungseinheit 112 zugeordnet werden kann, beispielsweise einem Eingangsbereich der Verarbeitungseinheit, und/oder einem Übergangsbereich (310, siehe FIG.3A bis FIG.5B) zwischen Transportstrecke 104 und Verarbeitungseinheit 112. Der Überwachungsbereich kann beispielsweise eine Schütte oder eine geneigte Ebene am Eingang der Verarbeitungseinheit oder direkt anschließend an die Transportstrecke 104 oder als Teil dieser vor der Verarbeitungseinheit 112 aufweisen.

Der Sensor 134 ist eingerichtet einen Abstand bzw. eine Entfernung 192, 194 zu dem Leergutgebinde 190 zu erfassen. Die Ermittlungsvorrichtung kann aus dem erfassten Abstand 192, 194 eine Änderung des Abstandes 192, 194 ermitteln. Der Abstand 192, 194 kann sich durch einen Transport des Leergutgebindes 190 entlang der Transportstrecke 104 ändern (in FIG.1A mittels des Pfeils des Leergutgebindes 190 veranschaulicht).

Die ermittelte Abstandsänderung ermöglicht es, Abweichungen der Bewegung des Leergutgebindes 190 auf der Transportstrecke 104 von einer Referenzbewegung zu ermitteln. Abweichungen können auf eine Störung oder eine Manipulation der Verarbeitung des Leergutgebindes hinweisen. Eine Referenzbewegung kann beispielsweise die Bewegung eines Transportbandes der Transportstrecke 104 sein. Alternativ oder zusätzlich kann die Referenzbewegung die Bewegung ähnlicher Formkörper 190, beispielsweise desselben Leergutgebindetyps, entlang der Transportstrecke 104 sein.

Der Sensor 134 kann zur kontaktlosen Messung der Entfernung 192, 194 zu dem transportierten Leergutgebinde 190, d.h. zur Entfernungsmessung, eingerichtet sein. Der Sensor 134 kann beispielsweise einen Infrarotlicht-Sendeempfänger, einen Laser-Sendeempfänger, einen Radar-Sendeempfänger, einen Ultraschall-Sendeempfänger, einen Schall-Sendeempfänger, oder einen sonstigen herkömmlichen Strahlungs-/Schall-Sensor bzw. Sendeempfänger aufweisen.

Eine hohe Abtastrate des Sensors 134 ermöglicht durch die Signallaufzeiten (in FIG.1A mittels der unterschiedlichen Pfeile 192, 194 veranschaulicht) zu erfassen, wie sich das Leergutgebinde 190 in dem Überwachungsraum bewegt, beispielsweise die Bewegungsrichtung und/oder die Bewegungsgeschwindigkeit relativ zur Transportstrecke.

Der Sensor 134 übermittelt den erfassten Abstand oder eine dazu korrespondierende Information an die Ermittlungsvorrichtung 118 (in FIG.1A mittels des Pfeils 142 veranschaulicht). Die Ermittlungsvorrichtung 118 ermittelt anhand des erfassten Abstandes 192, 194 eine Änderung des Abstandes (auch als Abstandsänderung, Änderungsrate des Abstands oder Bewegungsgeschwindigkeit bezeichnet) des Leergutgebindes 190 zu dem Sensor 134. Dies ermöglicht zu ermitteln, ob ein konformer Transport des Leergutgebindes 190 von der Aufnahmevorrichtung 110 zu der Verarbeitungseinheit 112 erfolgt ist. Ein konformer Transport liegt beispielsweise bei Übereinstimmung mit einer Referenzbewegung vor, beispielsweise innerhalb eines vorgegebenen bzw. statistisch ermittelten Fehlerbereiches um eine Referenzbewegung. Ein konformer Transport kann zusammen mit dem von dem Zufuhrsensor 132 ermittelten Leergutgebinde als eine erfolgte Entwertung (Zerstörung) des Leergutgebindes 190 interpretiert werden.

Bezüglich des Sensors 134 kann die Entfernung 192, 194 zum Leergutgebinde 190 zunehmen oder abnehmen, wodurch die relative Bewegungsrichtung des Leergutgebindes 190 zu dem Sensor 134 ermittelt werden kann. Die Änderungsrate des Abstandes 192, 194 ermöglicht eine Ermittlung der Bewegungsgeschwindigkeit des Leergutgebindes 190. Die Bewegungsgeschwindigkeit des Leergutgebindes 190 sollte bei einem konformen Transportvorgang mit der Bewegungsgeschwindigkeit der Transportstrecke übereinstimmen, beispielsweise einer Geschwindigkeit eines Transportbandes, Zuführbandes oder Förderbandes. Eine Übereinstimmung oder Abweichung davon ermöglichen Rückschlüsse auf eine korrekte Verarbeitung des Leergutgebindes 190 in der Verarbeitungseinheit 112.

Ist die Geschwindigkeit des Leergutgebindes 190 beispielsweise geringer als die Geschwindigkeit eines Transportbandes der Transportstrecke 104, auf dem das Leergutgebinde 190 transportiert wird, kann dies auf eine Blockade des Leergutgebindes 190 zurückzuführen sein. In diesem Fall kann ein Service-Fall-Alarm ausgelöst werden.

Ist die Geschwindigkeit des Leergutgebindes 190 beispielsweise negativ zu der Geschwindigkeit eines Transportbandes der Transportstrecke 104, auf dem das Leergutgebinde 190 transportiert wird, kann dies auf eine Entnahme des Leergutgebindes 190 oder ein Eingreifen auf das Leergutgebinde 190 zurückzuführen sein. In diesem Fall kann ein Notfall-Alarm ausgelöst werden.

Im Falle von zwei oder mehr Sensoren 134 oder Sensorbereichen zur Überwachung eines Überwachungsraumes kann ein Bewegungsvektor des Leergutgebindes entlang der Transportstrecke 104 ermittelt werden.

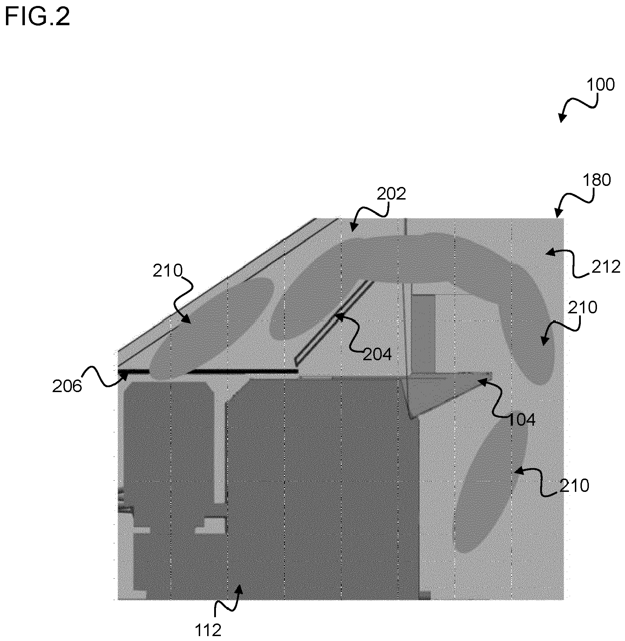

Der Sensor 134 kann an unterschiedlichen Positionen in oder an der Leergutgebinde-Rücknahmevorrichtung 100 angeordnet sein, wie in FIG.2 ausführlicher veranschaulicht ist.

Der ermittelte Transportvorgang des Leergutgebindes 190 zur Verarbeitungseinheit 112 und der von dem Zufuhrsensor 132 ermittelte Leergutgebindetyp können an die Pfandrückgabeeinheit 120 mittels Signalen 150, 154, die dazu korrespondierende Informationen aufweisen, übermittelt werden. Die Pfandrückgabeeinheit 120 kann das Pfand des zugeführten Leergutgebindes 102 daraufhin ausgeben (in FIG.1A mittels des Pfeils 160 veranschaulicht).

Darüberhinaus kann die Information zu dem erfassten Leergutgebinde von dem Zufuhrsensor 132 (in FIG.1A mittels des gepunkteten Pfeils 152 veranschaulicht) und/oder der Pfandrückgabeeinheit 120 (in FIG.1A mittels des gepunkteten Pfeils 156 veranschaulicht) an die Ermittlungsvorrichtung 118 übermittelt werden. Die Ermittlungsvorrichtung 118 kann mittels dieser Information im Laufe der Zeit die Zuordnung von Bewegungsprofilen unterschiedlicher Leergutgebindetypen zu verifizierten Entwertungen in einem Maschinenlernalgorithmus verbessern. Die Ermittlungsvorrichtung 118 kann dazu eine drahtlose oder drahtgebundene Kommunikationsverbindung mit der Pfandrückgabeeinheit 120 und/oder dem Zufuhrsensor 132 aufweisen.

Das entwerte Leergutgebinde 106 kann einem Sammelbehälter 114 zugeführt werden.

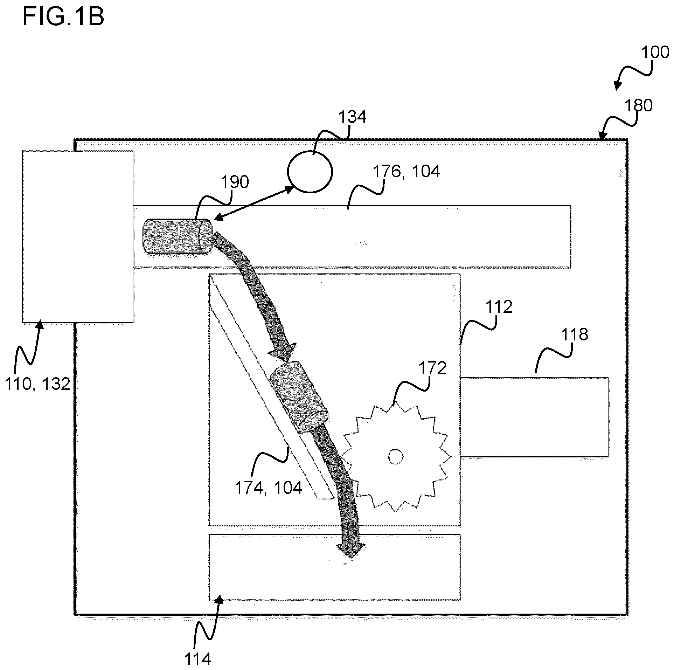

**FIG.1B** veranschaulicht eine weitere schematische Ansicht einer zuvor beschriebenen Leergutgebinde-Rücknahmevorrichtung 100 als Beispiel einer Verarbeitungsvorrichtung zum Zerstören von Formkörpern.

Die Aufnahmevorrichtung 110 kann den Zufuhrsensor 132 aufweisen, der vor einem Zuführband 176 (auch als Transportband bezeichnet) angeordnet ist. Das Zuführband 176 kann Teil der Transportstrecke 104 sein. Das Zuführband 176 kann eine aktive Transportvorrichtung sein, beispielsweise eine von einem Motor angetriebene Transportvorrichtung. Die Transportstrecke 104 kann weiterhin eine passive Transportvorrichtung aufweisen, beispielsweise eine Schütte oder geneigte Ebene 174.

Die Verarbeitungseinheit 112 kann ein mechanisches Werk 172 aufweisen, das mittels des Elektromotors 130 angetrieben wird. Leergutgebinde 190 können dem mechanischen Werk 172 von dem Zuführband 176 zugeführt werden, beispielsweise mittels einer geneigten Ebene 174 (z.B. einer geneigten Platte). Die geneigte Ebene 174 kann das Zuführband 176 mit dem mechanischen Werk 172 verbinden. Die geneigte Ebene 174 kann als Teil der Transportstrecke, als Teil der Verarbeitungseinheit oder als Übergangsbereich zwischen Transportstrecke und Verarbeitungseinheit aufgefasst werden. Eine Überwachung des Übergangsbereiches ermöglicht es zu verifizieren, dass der Formkörper die Verarbeitungseinheit gesichert zur Zerstörung erreicht hat.

Der Sensor 134 kann beispielsweise vor einem Eingang der Verarbeitungseinheit 112 angeordnet sein. Ein zugeführtes Leergutgebinde 190 bewegt sich mit einer durch die Transportstrecke 104 definierten Geschwindigkeit zur Verarbeitungseinheit 112. Die Geschwindigkeit des Leergutgebindes 190 kann beispielsweise deutlich geringer als die Fallgeschwindigkeit sein. Wenn der Formkörper den Überwachungsbereich der Transportstrecke 104 passiert, kann mittels des Sensors 134 die Bewegungsrichtung des Leergutgebindes 190 und dessen Bewegungsgeschwindigkeit relativ zum Sensor 134 erfasst werden. Die ermittelte Bewegungsgeschwindigkeit kann mit einer Referenzgeschwindigkeit verglichen werden. Die Referenzgeschwindigkeit ist beispielsweise die Geschwindigkeit eines Förderbandes 176 der Transportstrecke. Alternativ kann eine durchschnittliche Bewegungsgeschwindigkeit vergleichbarer Leergutgebinde 190 auf der Transportstrecke 104 als Referenzgeschwindigkeit verwendet werden. Sollte die erfasste Bewegungsgeschwindigkeit des Leergutgebindes 190 einen vorgegeben Schwellenwert überschreiten bzw. unterschreiten, beispielsweise einen Bereich von 1-2 Standardabweichungen von der Referenzgeschwindigkeit, kann die Ermittlungsvorrichtung 118 ein Ausgabesignal 154 (siehe FIG.1A) ausgeben. Das Ausgabesignal 154 kann eine Information aufweisen, die zu der ermittelten Abweichung korrespondiert. Dadurch kann ein Alarm ausgelöst werden, anwendungsspezifisch beispielsweise ein Service-Fall-Alarm oder einen Notfall-Alarm. Analog kann für die Bewegungsrichtung eine Referenzrichtung vorgesehen sein. Die Referenzrichtung kann beispielsweise die Bewegungsrichtung der Transportbandes 176 sein.

Sollte sich beispielsweise das Leergutgebinde 190 mit nahezu Fallgeschwindigkeit durch den Überwachungsbereich bewegen, beispielsweise indem das Leergutgebinde 190 von einem Transportband 176 der Transportstrecke 104 fällt, kann dies als Fehler von der Ermittlungsvorrichtung 118 ermittelt werden. Das von der Ermittlungsrichtung 118 ausgegebene Ausgabesignal kann eine dazu korrespondierende Information aufweisen.

Sollte das Leergutgebinde 190 auf der Transportstrecke 104 feststecken oder sich entgegen der Bewegungsrichtung des Transportbandes 176 bewegen, beispielsweise manuell entnommen werden, so verändert sich die Bewegungsgeschwindigkeit und die Bewegungsrichtung des Leergutgebindes 190 deutlich, was von der Ermittlungsrichtung 118 als Fehler ermittelt werden kann. Das von der Ermittlungsrichtung 118 ausgegebene Ausgabesignal kann eine dazu korrespondierende Information aufweisen.

**FIG.2** veranschaulicht eine schematische Querschnittsansicht einer Verarbeitungsvorrichtung 100. Die Verarbeitungsvorrichtung 100 weist ein Gehäuse 180 auf, innerhalb dessen die Aufnahmevorrichtung (nicht veranschaulicht) und die Verarbeitungseinheit 112, die mit der Aufnahmevorrichtung mittels einer Transportstrecke 104 verbunden ist, angeordnet sind. Das Gehäuse 180 kann eine oder mehrere Trennwände aufweisen, beispielsweise eine erste Trennwand 204 und/oder eine zweite Trennwand 206. Mittels einer Trennwand 204, 206 kann ein Bereich von einem anderen Bereich separiert werden. Beispielsweise kann ein Hohlraum 202, 212 von der Verarbeitungseinheit 112 mittels der zweiten Trennwand 206 separiert sein. Dadurch kann der Hohlraum 202, 212 frei von Verschmutzungen durch die Verarbeitungseinheit 112 gehalten werden. Der Sensor 134 kann in dem Hohlraum 202 angeordnet sein und somit vor Verschmutzungen durch die Verarbeitungseinheit 112 geschützt sein. Alternativ oder zusätzlich kann der Hohlraum 202 von der Aufnahmevorrichtung mittels der ersten Trennwand 204 separiert sein. Dadurch kann der Hohlraum 202 frei von Verschmutzungen aus der Umgebung der Verarbeitungsvorrichtung 100 gehalten werden.

Die Verarbeitungseinheit 112 kann beispielsweise eines oder mehrere der folgenden aufweisen: ein Schneidwerk, einen Kompaktierer, einen Crusher, einen Flaker, eine Brikettpresse, eine Ballenpresse, einen Kettentopfverdichter, eine thermische Verarbeitungseinheit. Die Verarbeitungseinheit 112 ist eingerichtet, den Formkörper zu zerstören, beispielsweise in einen sekundären Rohstoff umzuwandeln.

Die Transportstrecke 104 kann für einen aktiven Transport von Formkörpern eingerichtet sein, beispielsweis ein Förderband aufweisen. Alternativ oder zusätzlich kann die Transportstrecke 104 für einen passiven Transport von Formkörpern eingerichtet sein, beispielsweis eine Rutsche oder Schütte aufweisen. Die Transportstrecke kann eines oder mehrere aufweisen von einem Transportband, einem V-Band, einem Kettengliedförderer, einem Förderband, einer Rutsche, einer Schütte, oder einer Kombination davon.

Die Verarbeitungsvorrichtung 100 kann in dem Gehäuse 180 eine Vielzahl von Sensorpositionen 210 aufweisen, an denen ein oder mehrere Sensoren zur Überwachung der Transportstrecke angeordnet werden können. Die Sensorposition 210 kann sich beispielsweise in einem weiteren Hohlraum 212 um die Öffnung der Verarbeitungseinheit 112 befinden. Dies ermöglicht eine einfache Nachrüstung und Wartung der Sensoren. Alternativ oder zusätzlich kann ein oder mehrere Sensoren neben vor oder hinter der Öffnung der Verarbeitungseinheit 112 angeordnet sein, beispielsweise in dem Hohlraum 202 und durch eine oder mehrere Durchgangsöffnungen in der Verarbeitungseinheit 112 und/oder einer Trennwand 204, 206 die Transportstrecke 104 überwachen.

Abhängig von der Art des Sensors, beispielsweise der Strahlungsart, Technologie, kann eine freie Platzierung in einem beliebigen Winkel und Entfernung um die Verarbeitungseinheit 112 möglich sein, um die Transportstrecke 104 zu überwachen. Mit anderen Worten, eine Sichtverbindung des Sensors auf die Transportstrecke ist technologiespezifisch nicht unbedingt erforderlich.

Die Ermittlungsvorrichtung kann einen Maschinenlernalgorithmus aufweisen, der es ermöglicht, Übereinstimmungen und Abweichungen von vorgegebenen Bewegungsmustern vergleichbarer Formkörper, beispielsweise desselben Leergutgebindetyps, zu erkennen. Die Überwachung kann wahlweise durch einen eigenen Trigger der Ermittlungsvorrichtung oder durch einen externen Puls, beispielsweise von dem Zufuhrsignal des Zufuhrsensors, ausgelöst werden.

**FIG.3A** veranschaulicht eine schematische seitliche Querschnittsansicht und **FIG.3B** veranschaulicht eine schematische Schnittansicht aus FIG.3A.

Der Sensor 134 kann einen oder mehrere Sensoren oder Sensorbereiche aufweisen, die einen vorbestimmten Bereich der Transportstrecke 104, 174 überwachen, beispielsweise einen Eingangsbereich 310 der Verarbeitungseinheit 112. Bei einer konformen Bewegung eines Leergutgebindes 190 in den Eingangsbereich 310 der Verarbeitungseinheit 112 kann davon ausgegangen werden, dass das Leergutgebinde 190 die Verarbeitungseinheit 112 erreicht hat und entsprechend der Verarbeitungseinheit 112 verarbeitet wurde.

Der Sensor 134 kann mehrere Sensorbereiche 300, 302, 304 aufweisen, um den Eingangsbereich 310 zu überwachen. Das Leergutgebinde 190 kann sich durch einen oder mehrere der Sensorbereiche 300, 302, 304 bewegen. Das Leergutgebinde 190 kann sich gleichzeitig oder nacheinander durch mehrere der Sensorbereiche 300, 302, 304 bewegen. Die mehreren Sensorbereich 300, 302, 304 können unterschiedliche Abschnitte des vorbestimmten Bereichs überwachen.

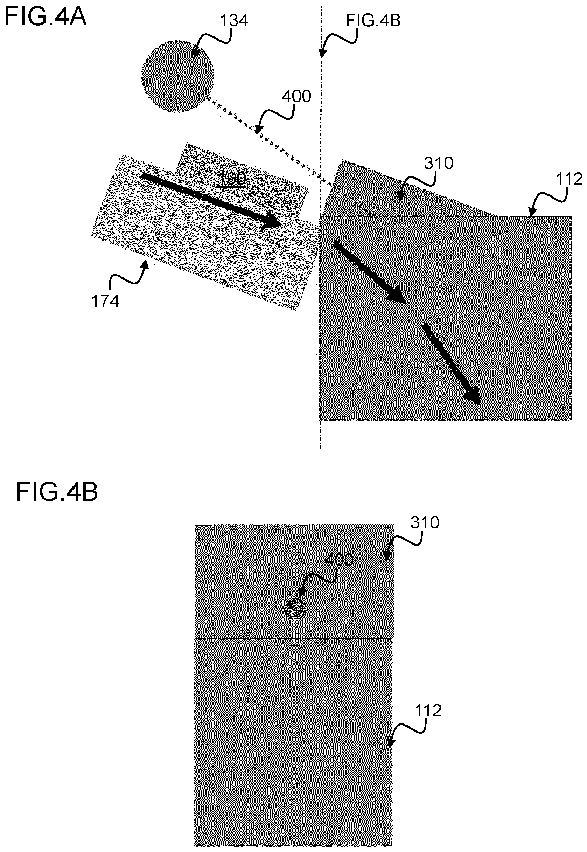

**FIG.4A** veranschaulicht eine schematische seitliche Querschnittsansicht und **FIG.4B** veranschaulicht eine schematische Schnittansicht aus FIG.4A.

Der Sensor 134 kann einen punktförmigen Sensorbereich 400 aufweisen, den das Leergutgebinde 190 unabhängig von dem Leergutgebindetyp oder der Orientierung auf der Transportstrecke 104 passiert, beispielsweise zentral bzw. mittig im Eingangsbereich 310 der Verarbeitungseinheit 112. Bei einer konformen Bewegung eines Leergutgebindes 190 in den Eingangsbereich 310 der Verarbeitungseinheit 112 passiert das Leergutgebinde 190 diesen Sensorbereich 400 und es kann davon ausgegangen werden, dass das Leergutgebinde 190 die Verarbeitungseinheit 112 erreicht hat und entsprechend der Verarbeitungseinheit 112 verarbeitet wurde.

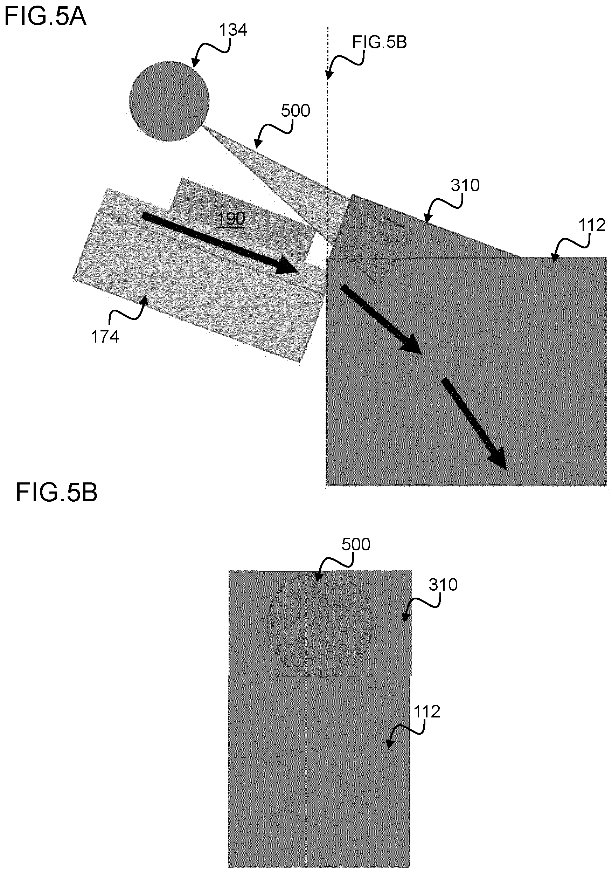

**FIG.5A** veranschaulicht eine schematische seitliche Querschnittsansicht und **FIG.5B** veranschaulicht eine schematische Schnittansicht aus FIG.5A.

Der Sensor 134 kann einen keulenförmigen Sensorbereich 500 aufweisen, den das Leergutgebinde 190 unabhängig von dem Leergutgebindetyp oder der Orientierung auf der Transportstrecke 104 passiert, beispielsweise zentral im Eingangsbereich 310 der Verarbeitungseinheit. Der keulenförmige Sensorbereich 500 kann einen größeren Bereich abdecken als der punktförmige Sensorbereich in FIG.4A/4B, beispielsweise für den Fall größerer Unsicherheit, ob der zentrale Bereich von dem Leergutgebinde 190 passiert wird. Eine größere Unsicherheit kann beispielsweise gegeben sein, wenn der Verarbeitungseinheit 112 sehr unterschiedliche Leergutgebinde 190 zugeführt werden, beispielsweise mit einem Volumen in einem Bereich von 50 ml bis 3000 ml.

Bei einer konformen Bewegung eines Leergutgebindes 190 in den Eingangsbereich 310 der Verarbeitungseinheit 112 passiert das Leergutgebinde 190 diesen Sensorbereich 500 unabhängig von der Größe des Leergutgebindes und es kann davon ausgegangen werden, dass das Leergutgebinde 190 die Verarbeitungseinheit 112 erreicht hat und entsprechend der Verarbeitungseinheit 112 verarbeitet wurde.

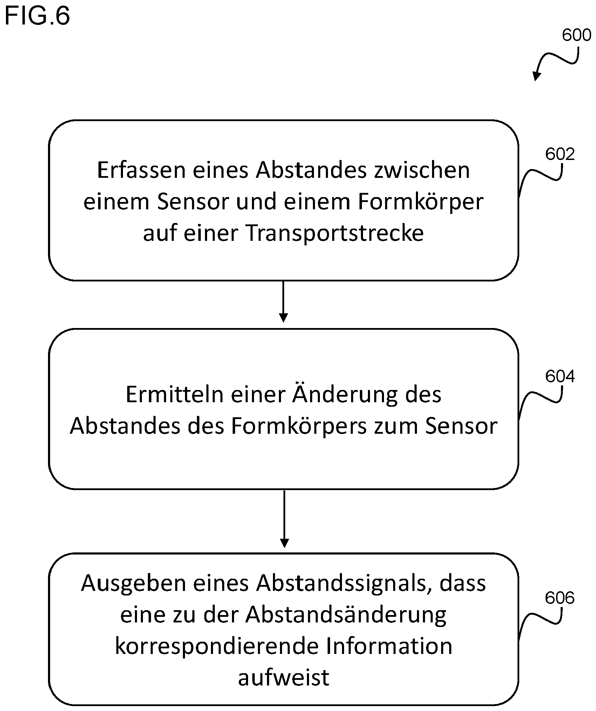

**FIG.6** veranschaulicht ein Ablaufdiagramm eines Verfahrens 600 zum Entwerten von Formkörpern, beispielsweise zum Zerstören von Einweg-Leergutgebinden in der Leergutgebinde-Rücknahme.

Das Verfahren 600 kann mit einer zuvor beschriebenen Verarbeitungsvorrichtung 100 durchgeführt werden (siehe FIG.1A bis FIG.5B).

Das Verfahren 600 weist ein Erfassen 602 eines Abstandes zwischen dem Sensor und dem Formkörper auf der Transportstrecke auf.

Das Verfahren 600 weist ein Ermitteln 604 einer Änderung des Abstandes des Formkörpers zum Sensor auf.

Das Verfahren 600 weist ein Ausgeben 606 eines Abstandssignals 154 auf, dass eine zu der Abstandsänderung korrespondierende Information aufweist.

Das Verfahren kann ferner ein Vergleichen der Abstandsänderungen mit einer Bewegungsrichtung der Transportstrecke aufweisen, wobei das Abstandssignal eine Information aufweist, die zu dem Ergebnis des Vergleichs korrespondiert.

Das Verfahren kann ferner ein Vergleichen der Abstandsänderungen mit einer Bewegungsgeschwindigkeit der Transportstrecke, wobei das Abstandssignal eine Information aufweist, die zu dem Ergebnis des Vergleichs korrespondiert.

Im Folgenden werden einige Beispiele beschrieben, die sich auf das hierin Beschriebene und in den Figuren Dargestellte beziehen.

Beispiel 1 ist eine Verarbeitungsvorrichtung, aufweisend in einem Gehäuse: eine Aufnahmevorrichtung zum Aufnehmen eines zu verarbeitenden Formkörpers; eine Transportstrecke; eine Verarbeitungseinheit, die zu einem Entwerten des Formkörpers eingerichtet und mit der Aufnahmevorrichtung mittels der Transportstrecke verbunden ist, wobei die Transportstrecke eingerichtet ist, den Formkörper von der Aufnahmevorrichtung zu der Verarbeitungseinheit zu transportieren; mindestens einen Sensor, der eingerichtet ist, einen Abstand zwischen dem Sensor und dem Formkörper an mindestens einer Position der Transportstrecke zu erfassen; und eine Ermittlungsvorrichtung, die eingerichtet eine zeitliche Änderung des Abstandes zu ermitteln und ein Abstandssignal auszugeben, das zu der ermittelten Abstandsänderung korrespondiert. Das Entwerten kann beispielsweise ein Zerstören des Formkörpers sein, beispielsweise im Falle eines Einweg-Leergutgebindes. Alternativ oder zusätzlich kann das Entwerten ein Löschen oder ein Zurücksetzen einer Information eines Speicher-Chips sein. Der Speicher-Chip kann beispielsweise ein RFID-Chip sein und die Information eine RFID. Der Speicher-Chip kann an oder in dem Formkörper angebracht sein. Der Formkörper kann in diesem Fall beispielsweise ein Mehrweg-Pfandgebinde sein, dessen Formkörper nicht zerstört wird, beispielsweise ein MehrwegGeschirr. Die RFID kann eine zu einem Pfand korrespondierende Information sein. Das Löschen bzw. Zurücksetzen der RFID kann zu einem Entfernen des Pfands korrespondieren.

In Beispiel 2 kann der Gegenstand von Beispiel 1 optional aufweisen, dass die Transportstrecke und die Verarbeitungseinheit einen Übergangsbereich aufweisen, der die Transportstrecke mit der Verarbeitungseinheit verbindet, wobei die Position zur Messung des Abstandes in dem Übergangsbereich angeordnet ist.

In Beispiel 3 kann der Gegenstand von Beispiel 1 oder 2 optional aufweisen, dass der Sensor eingerichtet ist, einen ersten Abstand an einer Position der Transportstrecke zu erfassen und einen zweiten Abstand an einer zweiten Position der Transportstrecke zu erfassen, und die Ermittlungsvorrichtung eingerichtet ist, eine erste Abstandsänderung an der ersten Position und eine zweite Abstandsänderung an der zweiten Position zu ermitteln.

In Beispiel 4 kann der Gegenstand von Beispiel 2 optional aufweisen, dass das Abstandssignal eine Information aufweist, die zu dem Unterschied zwischen der ersten Abstandsänderung und der zweiten Abstandsänderung korrespondiert.

In Beispiel 5 kann der Gegenstand von einem der Beispiel 1 bis 4 optional aufweisen, dass die Transportstrecke derart eingerichtet ist, dass der Formkörper eine vorgegebene Bewegungsrichtung von der Aufnahmevorrichtung zu der Verarbeitungseinheit aufweist, und die Ermittlungsvorrichtung eingerichtet ist, eine Abweichung oder Übereinstimmung der Bewegungsrichtung mit Abstandsänderung zu ermitteln.

In Beispiel 6 kann der Gegenstand von einem der Beispiele 1 bis 5 optional aufweisen, dass die Transportstrecke derart eingerichtet ist, dass der Formkörper eine vorgegebene Bewegungsgeschwindigkeit von der Aufnahmevorrichtung zu der Verarbeitungseinheit aufweist, und die Ermittlungsvorrichtung eingerichtet ist, eine Abweichung oder Übereinstimmung der Bewegungsgeschwindigkeit mit Abstandsänderung zu ermitteln.

In Beispiel 7 kann der Gegenstand von einem der Beispiele 5 bis 6 optional aufweisen, dass der Sensor derart in dem Gehäuse angeordnet ist, dass die Abstandsänderung in Bewegungsrichtung erfasst wird.

In Beispiel 8 kann der Gegenstand von einem der Beispiele 5 bis 6 optional aufweisen, dass der Sensor derart in dem Gehäuse angeordnet ist, dass die Abstandsänderung entgegen der Bewegungsrichtung erfasst wird.

In Beispiel 9 kann der Gegenstand von einem der Beispiele 1 bis 8 optional aufweisen, dass der Sensor zur kontaktlosen Abstandsmessung eingerichtet ist.

In Beispiel 10 kann der Gegenstand von einem der Beispiele 1 bis 9 optional aufweisen, dass der Sensor zumindest eines aufweist von: einem Infrarot-Empfänger; einem Infrarot-Sendeempfänger; einem Laser-Sendeempfänger; einem Radar-Sendeempfänger; einem Ultraschall-Sendeempfänger; einem Schall-Sendeempfänger.

In Beispiel 11 kann der Gegenstand von einem der Beispiele 1 bis 10 optional aufweisen, dass der Sensor eingerichtet ist eine Vielzahl von zeitlich versetzten Abständen zu demselben Formkörper zu erfassen.

In Beispiel 12 kann der Gegenstand von einem der Beispiele 1 bis 11 optional aufweisen, dass die Ermittlungsvorrichtung eingerichtet ist eine Vielzahl von zeitlich versetzten Abstandsänderungen zu demselben Formkörper zu ermitteln.

In Beispiel 13 kann der Gegenstand von einem der Beispiele 1 bis 12 optional aufweisen, dass der Sensor eingerichtet ist eine Vielzahl von räumlich versetzten Abständen zu demselben Formkörper zu erfassen.

In Beispiel 14 kann der Gegenstand von einem der Beispiele 1 bis 13 optional aufweisen, dass die Ermittlungsvorrichtung eingerichtet ist eine Vielzahl von räumlich versetzten Abstandsänderungen zu demselben Formkörper zu ermitteln.

In Beispiel 15 kann der Gegenstand von einem der Beispiele 1 bis 14 optional ferner mindestens einen weiteren Sensor aufweisen, der eingerichtet ist, einen Abstand zwischen dem weiteren Sensor und dem Formkörper an mindestens einer weiteren Position der Transportstrecke zu erfassen; und wobei Ermittlungsvorrichtung eingerichtet eine Änderung des weiteren Abstandes zu ermitteln und ein Abstandssignal auszugeben, dass zu den ermittelten weiteren Abstandsänderungen korrespondiert.

In Beispiel 16 kann der Gegenstand von einem der Beispiele 1 bis 15 optional aufweisen, dass die Ermittlungsvorrichtung eingerichtet ist, dass Abstandssignal auszugeben, wenn die Abstandsänderung einen vorgegebenen Schwellenwert überschreitet oder unterschreitet.

In Beispiel 17 kann der Gegenstand von einem der Beispiele 1 bis 16 optional aufweisen, dass das Gehäuse mindestens eine erste Trennwand aufweist, wobei der Sensor mittels der ersten Trennwand von der Verarbeitungseinheit separiert ist.

In Beispiel 18 kann der Gegenstand von einem der Beispiele 1 bis 17 optional aufweisen, dass das Gehäuse mindestens eine zweite Trennwand aufweist, wobei der Sensor mittels der zweiten Trennwand von der Aufnahmevorrichtung separiert ist.

In Beispiel 19 kann der Gegenstand von einem der Beispiele 1 bis 18 optional aufweisen, dass die Verarbeitungsvorrichtung eine Leergutgebinde-Rücknahmevorrichtung ist, der Formkörper ein Leergutgebinde ist und die Verarbeitungseinheit eine Pfand-Entwertungseinheit ist.

In Beispiel 20 kann der Gegenstand von einem der Beispiele 1 bis 19 optional aufweisen, dass die Verarbeitungseinheit mindestens eines aufweist aus einem Schneidwerk, einem Kompaktierer, einem Crusher, einem Flaker, einer Brikettpresse, einer Ballenpresse, einem Kettentopfverdichter, und einer thermischen Verarbeitungseinheit.

In Beispiel 21 kann der Gegenstand von einem der Beispiele 1 bis 20 optional aufweisen, dass die Transportstrecke eines oder mehrere aufweist aus: einem Transportband, einem V-Band, einem Kettengliedförderer, einem Förderband, einer Rutsche, und einer Schütte.

In Beispiel 22 kann der Gegenstand von einem der Beispiele 1 bis 21 optional aufweisen, dass das Gehäuse derart eingerichtet ist, dass ein von der Verarbeitungseinheit separierter Hohlraum ausgebildet ist, wobei der Sensor in dem Hohlraum angeordnet ist.

In Beispiel 23 kann der Gegenstand von einem der Beispiele 1 bis 22 optional aufweisen, dass die Verarbeitungseinheit räumlich zwischen dem Sensor und der Transportstrecke angeordnet ist, und die Verarbeitungseinheit mindestens eine Durchgangsöffnung aufweist, durch die der Sensor den Abstand erfasst.

In Beispiel 24 kann der Gegenstand von einem der Beispiele 1 bis 23 optional aufweisen, dass die Ermittlungsvorrichtung einen maschinenlern Algorithmus aufweist, der eingerichtet ist, eine ermittelte Abstandsänderung mit vorgegebenen Bewegungsmustern eines Formkörpers entlang der Transportstrecke abzugleichen.

In Beispiel 25 kann der Gegenstand von einem der Beispiele 1 bis 24 optional aufweisen, dass die Aufnahmevorrichtung einen Zufuhrsensor aufweist, der eingerichtet ist, die Zufuhr eines Formkörpers zu erfassen und ein Zufuhrsignal, dass zu der erfassten Zufuhr korrespondiert, auszugeben.

In Beispiel 26 kann der Gegenstand von einem der Beispiele 1 bis 25 optional aufweisen, dass die Ermittlungsvorrichtung eingerichtet ist, den Sensor zu steuern.

In Beispiel 27 kann der Gegenstand von einem der Beispiele 25 bis 26 optional aufweisen, dass die Ermittlungsvorrichtung eingerichtet ist, das Zufuhrsignal zu empfangen und den Sensor derart anzusteuern, dass eine Erfassung des Abstandes erfolgt, wenn die Zufuhr eines Formkörpers erfasst wurde.

In Beispiel 28 kann der Gegenstand von einem der Beispiele 1 bis 27 optional aufweisen, dass der Sensor einen punktförmigen Sensorbereich aufweist, in dem der Abstand zum Formkörper ermittelt wird.

In Beispiel 29 kann der Gegenstand von einem der Beispiele 1 bis 27 optional aufweisen, dass der Sensor einen punktförmigen Sensorbereich aufweist, in dem der Abstand zum Formkörper ermittelt wird, wobei der Sensorbereich ungefähr mittig in dem Endabschnitt angeordnet ist.

In Beispiel 30 kann der Gegenstand von einem der Beispiele 1 bis 27 optional aufweisen, dass der Sensor eine Vielzahl punktförmiger Sensorbereiche aufweist, wobei in zumindest einem der Sensorbereich der Abstand zum Formkörper ermittelt wird.

In Beispiel 31 kann der Gegenstand von einem der Beispiele 1 bis 27 optional aufweisen, dass der Sensor eine Vielzahl punktförmiger Sensorbereiche aufweist und wobei die Transportstrecke eine Breite aufweist, wobei die Sensorbereiche über die Breite der Transportstrecke derart verteilt angeordnet sind, dass der Formkörper zumindest einen der Sensorbereiche passiert.

In Beispiel 32 kann der Gegenstand von einem der Beispiele 1 bis 27 optional aufweisen, dass der Sensor eine Vielzahl punktförmiger Sensorbereiche aufweist, die in dem Endabschnitt der Transportstrecke angeordnet sind.

In Beispiel 33 kann der Gegenstand von einem der Beispiele 1 bis 27 optional aufweisen, dass der Sensor einen keulenförmigen Sensorbereich aufweist, in dem der Abstand zum Formkörper ermittelt wird.

In Beispiel 34 kann der Gegenstand von einem der Beispiele 1 bis 27 optional aufweisen, dass der Sensor einen keulenförmigen Sensorbereich aufweist, in dem der Abstand zum Formkörper ermittelt wird, wobei der keulenförmige Sensorbereich in dem Endabschnitt der Transportstrecke angeordnet ist.

Beispiel 35 ist ein computerlesbares Medium mit Instruktionen für eine Verarbeitungsvorrichtung eingerichtet gemäß einem der Beispiele 1 bis 34, die Instruktionen, wenn sie von einem Prozessor ausgeführt werden, veranlassen den Prozessor zum: Erfassen eines Abstandes zwischen dem Sensor und dem Formkörper auf der Transportstrecke; Ermitteln einer Änderung des Abstandes des Formkörpers zum Sensor; und Ausgeben eines Abstandssignals, dass eine zu der Abstandsänderung korrespondierende Information aufweist.

In Beispiel 36 kann der Gegenstand von Beispiel 35 optional Instruktionen aufweisen, die, wenn sie von einem Prozessor ausgeführt werden, den Prozessor veranlassen zum: Vergleichen der Abstandsänderungen mit einer Bewegungsrichtung der Transportstrecke, wobei das Abstandssignal eine Information aufweist, die zu dem Ergebnis des Vergleichs korrespondiert.

In Beispiel 37 kann der Gegenstand von Beispiel 35 optional Instruktionen aufweisen, die, wenn sie von einem Prozessor ausgeführt werden, den Prozessor veranlassen zum Vergleichen der Abstandsänderungen mit einer Bewegungsgeschwindigkeit der Transportstrecke, wobei das Abstandssignal eine Information aufweist, die zu dem Ergebnis des Vergleichs korrespondiert.

Beispiel 38 ist eine Ermittlungsvorrichtung für eine Verarbeitungsvorrichtung zum Entwerten von Formkörpern, die Ermittlungsvorrichtung eingerichtet eine zeitliche Änderung eines Abstandes eines Formkörpers zu einem Sensor zu ermitteln und ein Abstandssignal auszugeben, das zu der ermittelten Abstandsänderung korrespondiert, wobei der Sensor eingerichtet ist, einen Abstand zwischen dem Sensor und dem Formkörper an mindestens einer Position einer Transportstrecke zu erfassen; und wobei die Transportstrecke eingerichtet ist, den Formkörper zu einer Verarbeitungseinheit zu transportieren, wobei die Verarbeitungseinheit zu einem Entwerten des Formkörpers eingerichtet ist und mit der Transportstrecke verbunden ist. Das Entwerten kann ein Zerstören des Formkörpers sein. Alternativ oder zusätzlich kann das Entwerten ein Löschen oder ein Zurücksetzen einer Information eines Speicher-Chips sein, beispielsweise eines RFID-Chips, der an oder in dem Formkörper angebracht ist.

In Beispiel 39 kann der Gegenstand von Beispiel 38 optional ferner einen Maschinenlernalgorithmus aufweisen, der eingerichtet ist, eine Information zu der Form des Formkörpers in der Ermittlung der Abstandsänderung zu berücksichtigen.

In Beispiel 40 kann der Gegenstand von Beispiel 38 oder 39 optional ferner einen Maschinenlernalgorithmus aufweisen, der eingerichtet ist, eine gespeicherte Information zu einem ermittelten Formkörpertyp aus einer Vielzahl von Formkörpertypen in der Ermittlung der Abstandsänderung zu berücksichtigen, wobei der zu entwertende Formkörper vom ermittelten Formkörpertyp ist.

In Beispiel 41 kann der Gegenstand von einem der Beispiele 38 bis 40 optional ferner einen Maschinenlernalgorithmus aufweisen, der eingerichtet ist, eine ermittelte Abstandsänderung mit vorgegebenen Bewegungsmustern eines Formkörpers entlang der Transportstrecke abzugleichen.

## Patentansprüche

1. Verarbeitungsvorrichtung (100), aufweisend in einem Gehäuse (180):
eine Aufnahmevorrichtung (110) zum Aufnehmen eines zu verarbeitenden Formkörpers (102, 190);
eine Transportstrecke (104, 174, 176);
eine Verarbeitungseinheit (112), die zu einem Entwerten des Formkörpers (190) eingerichtet und mit der Aufnahmevorrichtung (110) mittels der Transportstrecke (104, 174, 176) verbunden ist, wobei die Transportstrecke (104, 174, 176) eingerichtet ist, den Formkörper (190) von der Aufnahmevorrichtung (110) zu der Verarbeitungseinheit (112) zu transportieren;
mindestens einen Sensor (134), der eingerichtet ist,
einen Abstand (192, 194) zwischen dem Sensor (134) und dem Formkörper (190) an mindestens einer Position der Transportstrecke (104, 174, 176) zu erfassen; und
eine Ermittlungsvorrichtung (118), die eingerichtet eine zeitliche Änderung des Abstandes (192, 194) zu ermitteln und ein Abstandssignal (154) auszugeben, das zu der ermittelten Abstandsänderung korrespondiert.

2. Verarbeitungsvorrichtung (100) gemäß Anspruch 1, wobei das Entwerten ein Zerstören des Formkörpers ist.

3. Verarbeitungsvorrichtung (100) gemäß Anspruch 1, wobei das Entwerten ein Löschen oder ein Zurücksetzen einer Information eines Speicher-Chips ist, insbesondere eines RFID-Chips, der an oder in dem Formkörper angebracht ist.

4. Verarbeitungsvorrichtung (100) gemäß einem der Ansprüche 1 bis 3, wobei die Transportstrecke (104, 174, 176) und die Verarbeitungseinheit (112) einen Übergangsbereich (310) aufweisen, der die Transportstrecke (104, 174, 176) mit der Verarbeitungseinheit (112) verbindet, wobei die Position zur Messung des Abstandes (192, 194) in dem Übergangsbereich (310) angeordnet ist.

5. Verarbeitungsvorrichtung (100) gemäß einem der Ansprüche 1 bis 4, wobei die Transportstrecke (104, 174, 176) derart eingerichtet ist, dass der Formkörper (190) eine vorgegebene Bewegungsrichtung von der Aufnahmevorrichtung (110) zu der Verarbeitungseinheit (112) aufweist, und die Ermittlungsvorrichtung (118) eingerichtet ist, eine Abweichung oder Übereinstimmung der Bewegungsrichtung mit Abstandsänderung zu ermitteln.

6. Verarbeitungsvorrichtung (100) gemäß einem der Ansprüche 1 bis 5, wobei die Transportstrecke (104, 174, 176) derart eingerichtet ist, dass der Formkörper (190) eine vorgegebene Bewegungsgeschwindigkeit von der Aufnahmevorrichtung (110) zu der Verarbeitungseinheit (112) aufweist, und die Ermittlungsvorrichtung (118) eingerichtet ist, eine Abweichung oder Übereinstimmung der Bewegungsgeschwindigkeit mit Abstandsänderung zu ermitteln.

7. Verarbeitungsvorrichtung (100) gemäß einem der Ansprüche 1 bis 6, wobei die Verarbeitungsvorrichtung (100) eine Leergutgebinde-Rücknahmevorrichtung ist, der Formkörper (190) ein Leergutgebinde ist und die Verarbeitungseinheit (112) eine Pfand-Entwertungseinheit ist;
wobei die Verarbeitungseinheit (112) mindestens eines aufweist aus einem Schneidwerk, einem Kompaktierer, einem Crusher, einem Flaker, einer Brikettpresse, einer Ballenpresse, einem Kettentopfverdichter, und einer thermischen Verarbeitungseinheit (112); und
wobei die Transportstrecke (104, 174, 176) eines oder mehrere aufweist aus: einem Transportband, einem V-Band, einem Kettengliedförderer, einem Förderband, einer Rutsche, und einer Schütte.

8. Verarbeitungsvorrichtung (100) gemäß einem der Ansprüche 1 bis 7, wobei das Gehäuse (180) derart eingerichtet ist, dass ein von der Verarbeitungseinheit (112) separierter Hohlraum (202, 212) ausgebildet ist, wobei der Sensor (134) in dem Hohlraum (202, 212) angeordnet ist.

9. Verarbeitungsvorrichtung (100) gemäß einem der Ansprüche 1 bis 8, wobei die Verarbeitungseinheit (112) räumlich zwischen dem Sensor (134) und der Transportstrecke (104, 174, 176) angeordnet ist, und die Verarbeitungseinheit (112) mindestens eine Durchgangsöffnung aufweist, durch die der Sensor (134) den Abstand (192, 194) erfasst.

10. Verarbeitungsvorrichtung (100) gemäß einem der Ansprüche 1 bis 7, wobei die Aufnahmevorrichtung (110) einen Zufuhrsensor (132) aufweist, der eingerichtet ist, die Zufuhr eines Formkörpers (102) zu erfassen und ein Zufuhrsignal (150, 152), dass zu der erfassten Zufuhr korrespondiert, auszugeben;
wobei die Ermittlungsvorrichtung (118) eingerichtet ist, das Zufuhrsignal (150, 152) zu empfangen und den Sensor (134) derart anzusteuern, dass eine Erfassung des Abstandes (192, 194) erfolgt, wenn die Zufuhr eines Formkörpers (190) erfasst wurde.

11. Verarbeitungsvorrichtung (100) gemäß einem der Ansprüche 4 bis 10, wobei der Sensor (134) einen punktförmigen Sensorbereich (400) oder keulenförmige Sensorbereich (500) aufweist, in dem der Abstand (192, 194) zum Formkörper (190) ermittelt wird, wobei der Sensorbereich (400, 500) ungefähr mittig in dem Übergangsbereich (310) angeordnet ist.

12. Verarbeitungsvorrichtung (100) gemäß einem der Ansprüche 1 bis 11, wobei der Sensor (134) eine Vielzahl punktförmiger Sensorbereiche (300, 302, 304) aufweist und wobei die Transportstrecke (104, 174, 176) eine Breite aufweist, wobei die Sensorbereiche (300, 302, 304) über die Breite der Transportstrecke (104, 174, 176) derart verteilt angeordnet sind, dass der Formkörper (190) zumindest einen der Sensorbereiche (300, 302, 304) passiert.

13. Verarbeitungsvorrichtung (100) gemäß einem der Ansprüche 4 bis 12, wobei der Sensor eine Vielzahl punktförmiger Sensorbereiche aufweist, die in dem Übergangsbereich (310) der Transportstrecke (104, 174, 176) angeordnet sind.

14. Computerlesbares Medium mit Instruktionen für eine Verarbeitungsvorrichtung (100) eingerichtet gemäß Anspruch 1, die Instruktionen, wenn sie von einem Prozessor ausgeführt werden, den Prozessor veranlassen zum:
Erfassen (602) eines Abstandes zwischen dem Sensor und dem Formkörper (190) auf der Transportstrecke (104, 174, 176) ;
Ermitteln (604) einer Änderung des Abstandes (192, 194) des Formkörpers (190) zum Sensor; und
Ausgeben (606) eines Abstandssignals (154), dass eine zu der Abstandsänderung korrespondierende Information aufweist.

15. Computerlesbares Medium gemäß Anspruch 14, ferner aufweisend Instruktionen, die Instruktionen, wenn sie von einem Prozessor ausgeführt werden, den Prozessor veranlassen zum:
Vergleichen der Abstandsänderungen mit einer Bewegungsrichtung der Transportstrecke (104, 174, 176), wobei das Abstandssignal (154) eine Information aufweist, die zu dem Ergebnis des Vergleichs korrespondiert; und/oder
Vergleichen der Abstandsänderungen mit einer Bewegungsgeschwindigkeit der Transportstrecke (104, 174, 176), wobei das Abstandssignal (154) eine Information aufweist, die zu dem Ergebnis des Vergleichs korrespondiert.
